# FASCICULE DE BREVET EUROPEEN

(11) **EP 3 862 294 B1**
(45) Date de publication et mention de la délivrance du brevet: **04.12.2024**
(21) Numéro de dépôt: 21154631.2
(22) Date de dépôt: 01.02.2021
(51) Int. Cl.: B65F 3/00, G06Q 10/08

(54) **PROCÉDÉ ET SYSTÈME POUR LA COLLECTE DE CONTENEURS DE DÉCHETS**
VERFAHREN UND SYSTEM FÜR DAS EINSAMMELN VON ABFALLBEHÄLTERN
METHOD AND SYSTEM FOR COLLECTING WASTE CONTAINERS

(30) Priorité: 06.02.2020 FR 2001153
(43) Date de publication de la demande: 11.08.2021
(73) Titulaire: BH Technologies, 38000 Grenoble (FR)
(72) Inventeur: HABIB, Eric, 38000 GRENOBLE (FR); MIURA, Taïsei, 38000 GRENOBLE (FR)
(74) Mandataire: Plasseraud IP

(56) Documents cités:
- EP-A1- 1 818 281
- EP-A1- 2 974 984
- ES-A1- 2 353 498

## Description

### Domaine technique

La présente divulgation relève du domaine de la collecte des containeurs de déchets. La présente divulgation vise plus précisément un procédé pour la gestion de la collecte des containeurs de déchets. La présente divulgation vise également un système permettant la mise en oeuvre du procédé pour la gestion de la collecte des containeurs de déchets.

### Technique antérieure

De manière classique, la collecte de poubelles consiste à envoyer régulièrement une flotte de véhicules, généralement des camions spécialement conçus, pour ramasser le contenu de poubelles distribuées dans une zone géographique.

Comme les exploitants des véhicules ne connaissent pas la quantité de déchets contenu dans une poubelle avant d'arriver à la poubelle et de l'inspecter, le véhicule doit s'arrêter à chaque poubelle. La collecte des poubelles n'est alors pas efficace.

Ainsi, le document AU2013205211 décrit des poubelles équipées de capteurs pour mesurer le niveau de remplissage des poubelles. Le niveau de remplissage est envoyé à un serveur distant afin de déterminer si la poubelle a atteint un niveau de remplissage nécessitant sa collecte. Le serveur contient également la géo position de camions de collecte. Alors, le serveur peut envoyer au camion le plus proche les poubelles à collecter.

Ce procédé permet en effet une meilleure gestion des camions lors de la collecte de poubelles. Cependant, l'envoi de données depuis les poubelles vers le serveur nécessite une communication par un réseau de télécommunication. Lorsque la poubelle se trouve dans une zone non couverte par ledit réseau, sa collecte peut être compromise. Par ailleurs, ce mode de communication nécessite une énergie considérable, ce qui peut réduire l'autonomie des capteurs agencés dans les poubelles. Enfin, ce mode de communication engendre un coût d'exploitation conséquent.

Par ailleurs, ce procédé nécessite aux exploitants du camion d'adapter leurs tournées selon les informations reçues du serveur. Les exploitants du camion n'ont plus la possibilité de prendre de décisions de collecte locale, soit depuis le camion. Les exploitants subissent les décisions du serveur et ont une liberté limitée. Ceci peut générer un ressenti négatif pour les exploitants.

Les documents EP 1 818 281, EP 2 974 984 et .ES 2 353 489 divulguent chacun des systèmes dans lesquels des capteurs sont agencés dans un containeur pour transmettre des informations vers un camion de ramassage.

Il existe un besoin pour un procédé de gestion ne présentant pas au moins certains des inconvénients de l'art antérieur.

### Résumé

Il est proposé un procédé permettant de prendre une décision sur la collecte d'une poubelle depuis un véhicule, le véhicule suivant une tournée de collecte fixe, comprenant :
- passer à proximité d'une poubelle équipée d'un dispositif pour mesurer un niveau de remplissage de la poubelle
- recevoir du dispositif des informations, les informations comprenant un niveau de remplissage de la poubelle
- prendre une décision sur la collecte de la poubelle en fonction des informations reçues du dispositif et des informations relatives aux prévisions de passage d'un véhicule et/ou aux prévisions de remplissage de la poubelle lors d'un prochain passage de véhicule.

Ainsi, avantageusement, les exploitants du véhicule peuvent recevoir des informations d'une poubelle lors de son passage à proximité. La communication peut être une communication de courte portée, nécessitant une énergie et des coûts d'exploitation réduits. En particulier, le dispositif équipant la poubelle peut être dépourvu d'une communication de longue portée. Les exploitants peuvent également étudier les informations depuis le véhicule afin de prendre une décision locale de collecte, sans aller au contact effectif de la poubelle.

Par tournées fixes, on entend que le parcours suivi par le véhicule est prédéfini. Le parcours ne varie sensiblement pas d'une semaine à l'autre. Lors de la tournée fixe, le véhicule passe devant les mêmes poubelles que lors de la tournée précédente. De telles tournées fixes permettent de ne pas bousculer les habitudes des exploitants, des conducteurs et des habitants. En effet, il est possible de connaitre à l'avance les heures de passages du véhicule et de se conformer aux attentes. De telles tournées fixes permettent en outre une meilleure maitrise des coûts liés à la collecte. En effet, on obtient une meilleure vision de la consommation de carburant utilisée et de l'empreinte carbone des tournées. En outre, il apparait possible d'améliorer le contrôle sur le taux d'utilisation des véhicules, ainsi que sur leur disponibilité.

Dans le cadre de telles tournées fixes, les informations relatives aux prévisions de passage d'un véhicule et/ou de prévision de remplissage de la poubelle lors du prochain peuvent être connues. Les exploitants bénéficient d'informations complémentaires, outre les informations reçues de la poubelle, pour prendre une décision de collecte pertinente.

Les caractéristiques exposées dans les paragraphes suivants peuvent, optionnellement, être mises en oeuvre. Elles peuvent être mises en oeuvre indépendamment les unes des autres ou en combinaison les unes avec les autres.

Le procédé comprend en outre recevoir des informations de poubelles additionnelles, les poubelles additionnelles étant situées en dehors d'un trajet prévu par la tournée fixe, et décider de dévier de la tournée fixe selon les informations reçues des poubelles additionnelles. Ainsi, les tournées fixes n'excluent pas la possibilité aux exploitants d'adapter, de manière localisée et/ou ponctuelle, le trajet aux besoins de ramassage. Les exploitants ont alors une grande flexibilité et ont la possibilité d'améliorer la qualité de la collecte.

Par ailleurs, dans un exemple, le dispositif de collecte peut finir la tournée fixe sans que le véhicule soit rempli de déchets. Par finir la tournée fixe, on entend que le dispositif de collecte est passé devant l'ensemble des poubelles prévues sur le trajet. Dans cet exemple, une étape supplémentaire peut consister à prolonger la collecte en effectuant un complément de parcours. Le complément de parcours permet au dispositif de collecte de passer à proximité de poubelles supplémentaires. Il apparait ainsi possible de s'assurer que chaque collecte exploite les capacités de ramassage du dispositif de collecte, améliorant la qualité de la collecte.

Les informations reçues du dispositif peuvent comprendre un identifiant de la poubelle et/ou un identifiant du dispositif. Ainsi, les exploitants peuvent reconnaitre une poubelle parmi un ensemble de poubelles.

Une communication avec le dispositif peut se faire par réseau Bluetooth, Bluetooth à basse énergie ou un réseau radio local. Alors, le dispositif a une portée suffisante pour communiquer avec le véhicule lors de son passage. Le dispositif n'est pas tributaire de zones non-couverte par un réseau de télécommunication. L'énergie nécessaire au dispositif est réduite.

Le dispositif peut diffuser un signal de manière périodique. Alors, le véhicule peut détecter la présence d'un dispositif à proximité du véhicule.

La périodicité du signal diffusé par le dispositif peut-être modulable. Alors, le dispositif peut augmenter la périodicité du signal lorsqu'un passage de véhicule est prévu. L'énergie nécessaire au fonctionnement du dispositif peut-être réduite dans les périodes où aucune collecte n'est prévue.

Le passage à proximité d'une poubelle peut comprendre l'envoi d'une demande de réception des informations de la poubelle. Alors, le dispositif pour mesurer le niveau de remplissage n'envoie des informations que lors du passage d'un véhicule. L'énergie nécessaire au dispositif est réduite. De plus, les exploitants peuvent sélectionner, parmi un ensemble de poubelles, une poubelle ou un type de poubelle particulier avec laquelle communiquer.

Le procédé peut comprendre l'association des informations reçues du dispositif à une géo position. Alors, la position des poubelles peut être recensée lors du passage d'un véhicule. Le dispositif est dépourvu de capteur GPS, réduisant l'énergie nécessaire au fonctionnement du dispositif.

Le procédé peut comprendre le stockage des informations reçues du dispositif. Alors, le véhicule peut sauvegarder les informations collectées pour une future analyse.

Le procédé peut comprendre l'envoi des informations reçues du dispositif et/ou la décision de collecte et/ou des informations sur la tournée du véhicule vers un serveur distant. Alors, le serveur est mis à jour en temps réel. Des informations concernant la tournée du véhicule, par exemple un obstacle sur la chaussée, peuvent être envoyées au serveur à tout moment.

Les informations relatives aux prévisions de passage d'un véhicule et/ou de prévisions de remplissage de la poubelle lors du prochain passage peuvent être reçues du serveur. Alors, le véhicule est informé en temps réel. Le serveur peut injecter des informations complémentaires, par exemple une poubelle à interroger ou une prévision de trafic.

Une communication avec le serveur peut se faire par un réseau de télécommunication. Ainsi, le véhicule peut communiquer à distance du serveur en exploitant un réseau de télécommunication existant.

Une communication avec le serveur peut se faire avant et/ou après un trajet d'un dispositif de ramassage. Ainsi, le véhicule effectue une tournée sans communication avec le serveur. Les coûts d'exploitation d'un réseau de télécommunication sont réduits.

Le serveur peut réaliser une analyse statistique. Le serveur peut déterminer les prévisions de remplissage de la poubelle avant la prochaine tournée. Le serveur peut établir des prévisions de remplissage de poubelles. Le serveur peut optimiser les tournées pour limiter les débordements et optimiser les coûts liés à la collecte de poubelles. En particulier, les tournées fixes peuvent être optimisées sur le long terme, en tenant compte d'informations collectées sur un ensemble de tournées. Il apparait possible de tenir compte de fréquences de remplissage différentes dans la mise au point des tournées.

Le procédé peut comprendre la réception de données de capteurs quelconques aux alentours du véhicule. Alors, le véhicule peut collecter des informations sur des capteurs qui ne sont pas concernés par la collecte des poubelles, par exemple des compteurs d'eau, d'électricité, de gaz, des capteurs de bruit, de pollution ou d'occupation de places de parking.

Selon un autre aspect, il est proposé un système de collecte de poubelles comprenant :
- un ensemble de poubelles, chaque poubelle étant équipé d'un dispositif de détection du niveau de remplissage de la poubelle;
- un dispositif de collecte comprenant un véhicule, le véhicule étant adapté à suivre des tournées fixes, et une interface permettant de communiquer avec les poubelles à proximité du véhicule, l'interface étant configurée pour assister à la décision de collecte d'une poubelle durant les tournées fixes, dans lequel l'interface comprend un affichage pour informer un exploitant du niveau de remplissage de la poubelle, du prochain passage d'un véhicule et/ou d'une prévision de remplissage lors du prochain passage de véhicule.

Les caractéristiques exposées dans les paragraphes suivants peuvent, optionnellement, être mises en oeuvre. Elles peuvent être mises en oeuvre indépendamment les unes des autres ou en combinaison les unes avec les autres.

Le dispositif de détection peut comporter au moins un capteur de type capteur ultrason ou capteur infrarouge.

Les poubelles peuvent-être des conteneurs contenant du verre, des détritus recyclables, des déchets organiques, des déchets non recyclables, des textiles, ou des déchets métalliques. Il peut être prévu une classification de type des containeurs.

Le système peut comprendre un serveur distant, le dispositif de collecte étant configuré pour communiquer avec le serveur distant.

L'interface peut comprendre un affichage. Alors, les exploitants peuvent visualiser les informations et échanger avec le système.

L'affichage peut comporter au moins l'un parmi : une tournée du véhicule, la géo position des poubelles, l'identifiant d'une poubelle à proximité du véhicule, un niveau de remplissage de la poubelle à proximité du véhicule. Alors, l'exploitant a toutes les informations nécessaires pour prendre une décision de collecte.

### Brève description des dessins

D'autres caractéristiques, détails et avantages apparaîtront à la lecture de la description détaillée ci-après, et à l'analyse des dessins annexés, sur lesquels :
[Fig. 1] illustre schématiquement un système selon un mode de réalisation, au sens de l'invention.
[Fig. 2] illustre schématiquement un exemple de dispositif du système de la Figure 1, agencé sur un containeur, selon un mode de réalisation au sens de l'invention.
[Fig. 3] illustre schématiquement un exemple de dispositif de collecte du système de la Figure 1, selon un mode de réalisation au sens de l'invention.
[Fig. 4] illustre un exemple d'affichage de la figure 3 selon un mode de réalisation.
[Fig. 5] illustre schématiquement un organigramme selon un mode de réalisation au sens de l'invention.
[Fig. 6] illustre schématiquement une variante de système.

### Description des modes de réalisation

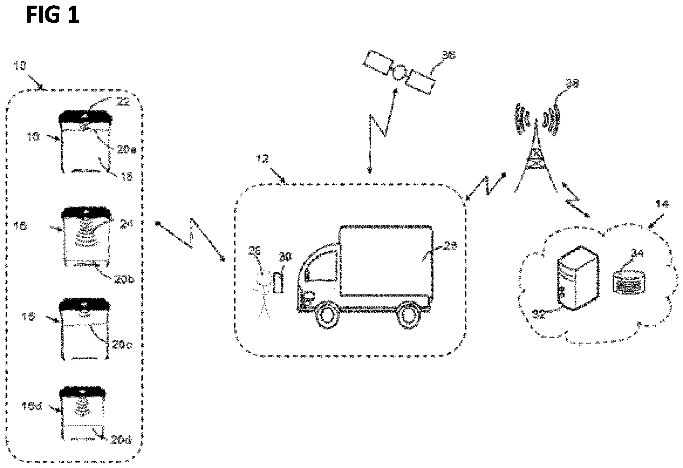

Le système illustré à la Figure 1 comprend essentiellement un ensemble de poubelles 10, un dispositif de collecte 12 et un dispositif d'analyse 14.

L'ensemble de poubelle 10 comporte une pluralité de poubelles 16 dispersées sur une zone géographique. Les poubelles 16 peuvent être des bacs roulants ou fixes, des containeurs, des colonnes aériennes, des colonnes semi-enterrées ou des colonnes enterrées. De manière générale, les poubelles 16 désignent tout type de conteneur destiné à recevoir des déchets 18. Les déchets 18 peuvent par exemple être du verre, des détritus recyclables tel que le carton, les conserves, le plastique, les emballages, des déchets organiques, des déchets non recyclables, des textiles, ou des déchets métalliques.

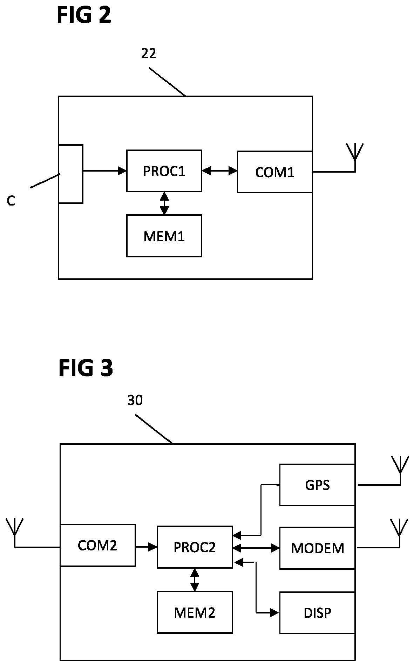

Chaque poubelle 16 comprend un dispositif de détection du niveau de remplissage de la poubelle 22. Le dispositif de détection du niveau de remplissage 22 comporte, comme visible sur la figure 2, un processeur PROC1, une mémoire MEM1, un capteur C et une interface de communication COM1.

Le processeur PROC1 exécute les commandes d'un programme informatique afin de commander les autres composants du dispositif de détection du niveau de remplissage de la poubelle 22. Le processeur PROC1 est apte à coopérer avec les autres composants du dispositif de détection du niveau de remplissage de la poubelle 22.

Le capteur C est agencé à l'intérieur de la poubelle 16. Le capteur C peut être un capteur de type ultrason ou infrarouge. De manière générale, le capteur C émet et capte des ondes 24 électromagnétiques ou acoustiques afin de mesurer respectivement un niveau de remplissage 20a, 20b, 20c, 20d de la poubelle 16 associée.

La mémoire MEM1 permet de stocker des informations. La mémoire MEM1 comporte le programme informatique permettant la coopération des composants de la poubelle. La mémoire MEM1 stocke le niveau de remplissage 20a, 20b, 20c, 20d de la poubelle 16 mesuré par le capteur C. La mémoire MEM1 peut également comporter un identifiant de la poubelle 16. Par identifiant, on entend un signe distinctif d'une poubelle 16 vis-à-vis d'une autre poubelle 16 distincte. L'identifiant peut par exemple être un numéro et/ou une suite de lettres et/ou peut contenir une information sur le type de déchets contenu par la poubelle 16. L'identifiant peut également être le numéro de série du capteur C agencé dans la poubelle 16. De manière générale, l'identifiant est propre à chaque poubelle 16.

L'interface de communication COM1 permet une communication du dispositif de mesure du niveau de remplissage 22 avec le dispositif de collecte 12. L'interface de communication COM1 exploite un réseau local. Le réseau local limite les coûts liés à l'exploitation d'un réseau de télécommunication, notamment un réseau IOT, GSM, Wifi ou tout autre LAN. Un réseau local permet également au dispositif de mesure du niveau de remplissage 22 de ne pas être tributaire des zones blanches dudit réseau de télécommunication.

Le réseau local peut par exemple être de type Bluetooth ou Low-Energy Bluetooth (BLTE). Alternativement, le réseau local peut être une radio courte portée. Ce type de réseau local offre une portée supérieure, par exemple comprise entre 10 m et 100 m. Ce type de réseau local permet de limiter l'énergie nécessaire au fonctionnement dispositif de mesure du niveau de remplissage 22. Le dispositif de mesure du niveau de remplissage 22 peut voir son autonomie augmenter de plusieurs années.

Le dispositif de collecte 12 comporte un véhicule 26. Le véhicule 26 peut être tout type de véhicule pouvant circuler dans la zone géographique dans lequel se trouve l'ensemble de poubelles 10. Par collecte, on entend le ramassage des déchets contenus dans la poubelle 16. Le véhicule 26 peut être un camion de ramassage comportant un châssis et une benne ou un caisson, un camion classique à ridelles, un chariot à roues, ou un véhicule non motorisé. De manière générale, le véhicule 26 peut être de taille et de capacité quelconque.

On peut considérer que le dispositif de collecte 12 englobe également au moins exploitant ou chauffeur 28. Le véhicule 26 est opéré par l'exploitant, le cas échéant accompagné d'un ou plusieurs équipier(s). L'exploitant 28 opère le véhicule 26 et est apte à collecter les poubelles 16, c'est-à-dire de procéder au vidage des déchets de la poubelle 16 dans le dispositif de collecte 12.

Le dispositif de collecte 12 suit une tournée fixe. Par tournée fixe, on entend que le trajet TV du véhicule 26 est prédéterminé. Par trajet, on entend le chemin parcouru par le véhicule pour relier les poubelles 16. Les trajets TV sont familiers pour les exploitants 28. Les habitudes des exploitants 28 ne sont pas bousculées.

Plus précisément, dans le cadre des tournées fixes, le trajet TV du véhicule 26 ne varie sensiblement pas d'une semaine à l'autre. Le véhicule 26 passe au voisinage des mêmes poubelles 16 que lors de la tournée précédente. Les heures de passages du véhicule 26 sont connues par les exploitants et par les habitants, de sorte à ne pas changer leurs attentes et leurs habitudes. Il apparait également possible de calculer à l'avance l'empreinte carbone, le temps passé par les exploitants et les heures d'utilisation du véhicule 26. Les tournées fixes permettent ainsi une meilleure gestion des coûts et de la logistique des tournées.

En outre, dans le cadre de telles tournées fixes, les informations relatives aux prévisions de passage d'un véhicule 26 et/ou de prévision de remplissage de la poubelle lors du prochain peuvent être déterminées et sont connues. Les exploitants du véhicule 26 peuvent bénéficier d'informations complémentaires, outre les informations reçues de la poubelle, pour prendre une décision de collecte pertinente.

Le dispositif de collecte 12 comporte une interface 30. L'interface 30, illustrée à la figure 2 comporte un processeur PROC2, une interface de communication COM2, une antenne GPS, un modem MODEM, une mémoire MEM2, et un affichage DISP. L'interface 30 peut par exemple être une tablette tactile, un ordinateur portable ou une interface intégrée au véhicule 26. L'interface de communication COM2 et le MODEM peuvent être distinct de la tablette, de l'ordinateur ou de l'interface intégrée. Dans ce cas, l'interface de communication COM2 et le MODEM sont agencés dans le véhicule 26.

Le processeur PROC2 exécute les commandes d'un programme informatique afin de commander les autres composants de l'interface 30. Le processeur PROC2 est apte à coopérer avec les autres composants de l'interface 30.

L'interface de communication COM2 permet la communication du dispositif de collecte 12 avec le dispositif de mesure du niveau de remplissage 22. L'interface de communication COM2 exploite alors le même type de réseau local que l'interface de communication COM1 du dispositif de mesure du niveau de remplissage 22. L'interface de communication COM2 est alors compatible avec le réseau local de l'interface de communication COM1. Avantageusement, un passage du dispositif de collecte 12 à proximité de la poubelle 16 permet d'établir une communication. La communication peut être établie même lorsque la poubelle 16 se trouve dans une zone géographique n'étant pas couverte par un réseau de télécommunication, notamment par un réseau cellulaire.

L'antenne GPS permet de déterminer ou de mettre à jour une géo position du dispositif de collecte 12 par communication avec des satellites GPS 36. L'antenne GPS permet également de suivre le trajet TV du véhicule 26.

Le MODEM permet une communication avec un serveur distant 32. Le MODEM exploite un réseau de télécommunication. Par réseau de télécommunication, on entend un réseau ayant une portée étendue. Le réseau de télécommunication peut par exemple exploiter le réseau cellulaire, notamment GSM, 3G, 4G ou 5G. Dans ce cas, le MODEM exploite une antenne de communication 38.

La mémoire MEM2 permet de stocker des informations. La mémoire MEM2 comporte le programme informatique permettant la coopération des composants du dispositif de collecte 12. La mémoire MEM2 comprend également le trajet TV du véhicule 26 à suivre lors de la tournée. La mémoire MEM2 comprend également la géo position des poubelles 16 sur le trajet TV.

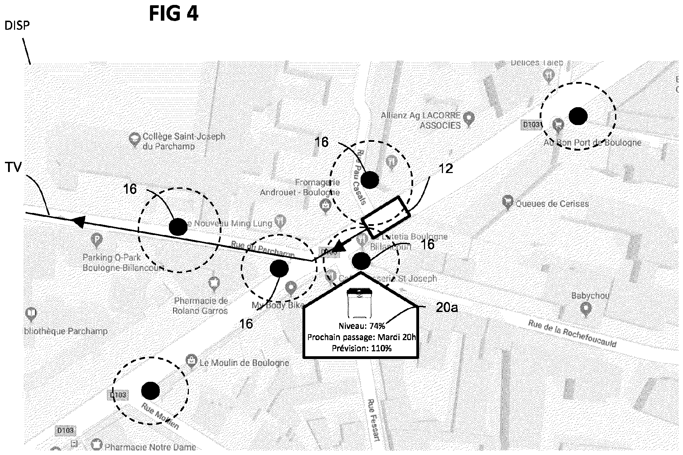

Un exemple d'affichage DISP est illustré à la figure 4. L'affichage DISP présente sur une carte le trajet TV du dispositif de collecte 12, la géo position des poubelles 16 sur le trajet TV. L'affichage DISP permet à l'exploitant 28 de sélectionner une poubelle 16. Avantageusement, lorsque plusieurs poubelles 16 sont à proximité, l'exploitant 28 peut s'assurer des sélectionner la poubelle 16 désirée. L'affichage DISP informe l'exploitant 28 du niveau de remplissage 20a de la poubelle 16, du prochain passage d'un véhicule 26 et d'une prévision de remplissage lors du prochain passage de véhicule 26. Ainsi, l'affichage DISP permet à l'exploitant 28 d'intervenir et d'échanger avec le dispositif de collecte 12 pour prendre une décision de collecte. L'affichage DISP permet à l'exploitant 28 d'accéder aux informations nécessaire pour estimer les poubelles 16 à risque de débordement avant un prochain passage de véhicule 26.

L'affichage DISP illustré à la figure 3 est graphique et tactile. Ainsi, l'exploitant 28 peut facilement échanger avec l'affichage DISP. Alternativement, l'affichage DISP peut être une alerte visuelle, par exemple une lumière, sonore, par exemple une alarme, ou un message textuel. De manière générale, l'affichage DISP peut être un moyen quelconque pour informer l'exploitant des poubelles 16 à risque de débordement avant un prochain passage de véhicule 26.

Le dispositif d'analyse 14 comporte le serveur 32 et une base de données 34.

La base de données 34 contient les tournées prévues d'un ensemble dispositifs de collecte 12. La base de données 34 comporte ainsi les dates et les trajets TV de l'ensemble des dispositifs de collecte 12. La base de données 34 comporte également la géo position de chacune des poubelles 16. La base de données 34 comporte également un historique des niveaux de remplissage 20a, 20b, 20c, 20d respectifs de chacune des poubelles 16.

Le serveur 32 est apte à recevoir des niveaux de remplissage 20a, 20b, 20c, 20d des poubelles 16, notamment par l'interface 30. Le serveur 32 vérifie la cohérence des niveaux de remplissage 20a, 20b, 20c, 20d avec l'historique des niveaux de remplissage. Si les nouveaux niveaux sont cohérents, alors les nouveaux niveaux de remplissage sont sauvegardés dans la base de données 34. Alors la base de données 34 peut être mise à jour.

Le serveur 32 réalise une analyse statistique. Alors, le serveur 32 compare les tournées prévues de l'ensemble des dispositifs de collecte 12 avec l'historique des niveaux de remplissage 20a, 20b, 20c, 20d pour établir des prévisions de remplissage de chacune des poubelles 16 lors d'un prochain passage de dispositif de collecte 12. Le serveur 32 associe les prévisions de remplissage à un coefficient de sécurité. Le coefficient de sécurité augmente les prévisions des niveaux de remplissage. Le coefficient de sécurité permet de prendre en compte une variation dans la fréquence de remplissage des poubelles 16.

Le serveur 32 optimise les tournées des dispositifs de collecte 12. Alors, les tournées peuvent évoluer afin d'optimiser les coûts engendrés par les tournées tout en limitant le risque de débordement des poubelles 16. On note que l'évolution des tournées peut s'inscrire dans le long terme. Les tournées restent fixes, c'est-à-dire qu'elles ne varient sensiblement pas d'une semaine à l'autre. Toutefois, l'analyse statistique peut permettre d'identifier des poubelles dont la fréquence de remplissage nécessite un passage de véhicule 26 plus fréquent. Dans ce cas, la tournée fixe peut être adaptée pour passer plus fréquemment devant les poubelles 16 concernées. La tournée fixe peut par exemple être adaptée périodiquement, par exemple une ou deux fois par mois ou même une ou deux fois par ans.

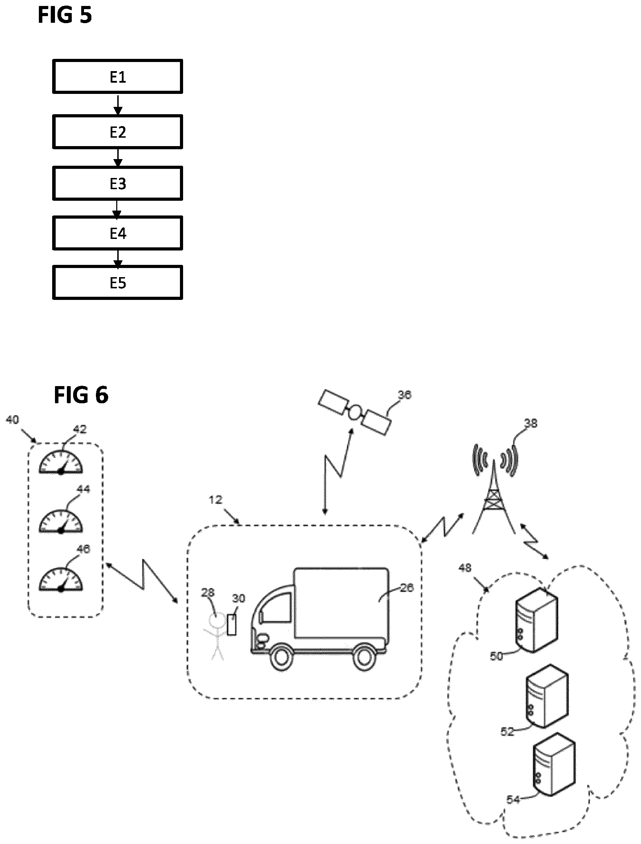

Par la suite, on décrit plus en détail le procédé de collecte des poubelles, en référence à la figure 5.

L'étape E1 correspond au passage d'un dispositif de collecte 12 à proximité de la poubelle 16. Lorsque le dispositif de collecte 12 est suffisamment proche de la poubelle, une communication peut-être établit entre le dispositif de collecte 12 et la poubelle 16.

L'étape E2 consiste à communiquer avec la poubelle 16 pour recevoir des informations de la poubelle 16. Les informations comprennent l'identifiant de la poubelle 16 et son niveau de remplissage 20a.

Dans un mode de réalisation, la poubelle 16 émet un signal périodique. L'émission du signal périodique permet de manifester la présence de la poubelle 16. La périodicité du signal est modulable. En dehors des plages horaires où une tournée peut se produite, la périodicité du signal est réduite, par exemple toutes les minutes, ou entièrement arrêtée. Alors, l'énergie nécessaire au fonctionnement de la poubelle 16 est réduite. Dans les horaires où un passage de dispositif de collecte 12 peut survenir, la périodicité du signal est augmentée, par exemple toutes les secondes. Alors, le signal pourra être perçu par le dispositif de collecte 12 plus rapidement lors de son passage.

Lorsque le signal est reçu par le dispositif de collecte 12, le dispositif de collecte 12 envoie une demande à la poubelle 16. La demande peut être envoyée automatiquement lors du passage du dispositif de collecte 12. Alternativement, l'exploitant est informé de la proximité de la poubelle 16 et peut choisir d'envoyer une demande vers la poubelle 16. Avantageusement, l'envoi d'une demande par l'exploitant 28 permet à l'exploitant 28 de sélectionner parmi plusieurs poubelles 16 situées à proximité du dispositif de collecte 12. En réponse à la demande, la poubelle 16 extrait et envoie son identifiant et son niveau de remplissage 20a vers le dispositif de collecte 12.

Dans un autre mode de réalisation, la poubelle 16 émet périodiquement son identifiant et son niveau de remplissage 20a. Comme dans le premier mode de réalisation, la périodicité de l'émission est modulable. Les informations sont alors reçues automatiquement lors du passage du dispositif de collecte 12 à proximité de la poubelle 16. Alors, la communication avec le dispositif de collecte 12 est monodirectionnelle et la réception des informations est simplifiée.

Dans un autre mode de réalisation, le dispositif de collecte 12 envoie une demande de manière périodique. Lors du passage du dispositif de collecte 12, la demande est perçue par la poubelle 16. En réponse à la demande, la poubelle 16 extrait et envoie son identifiant et son niveau de remplissage 20a.

L'étape E3 consiste à communiquer avec le serveur 32 pour recevoir des informations prévisionnelles. Les informations prévisionnelles comprennent la date de passage d'un prochain dispositif de collecte 12 et la prévision du niveau de remplissage de la poubelle 16 lors du prochain passage. Pour ce faire, le dispositif de collecte 12 envoie l'identifiant de la poubelle 16 vers le serveur 32. Le serveur 32 extrait les informations prévisionnelles et les envoie vers le dispositif de collecte 12. Avantageusement, ces informations peuvent être connues par le serveur 32 grâce à l'exploitation de tournées fixes. En effet, les horaires de passage d'un prochain véhicule sont connus, il s'agira de la prochaine tournée prévue.

L'étape E4 consiste à prendre une décision de collecte. L'exploitant 28 est informé des informations reçues de la poubelle 16 et des informations prévisionnelles. L'exploitant 28 peut comparer les informations prévisionnelles avec le niveau de remplissage 20a de la poubelle 16. Si la poubelle 16 est trop pleine par rapport à la prochaine date de passage, alors l'exploitant 28 peut décider de ramasser la poubelle 16. Si au contraire la poubelle 16 ne risque pas de déborder, alors l'exploitant 28 peut laisser la poubelle 16 en l'état. Avantageusement, la décision de collecte est prise au niveau du dispositif de collecte 12. Ceci permet notamment de limiter la charge du serveur 32.

On note que, dans certains cas, le dispositif de collecte 12 reçoit des informations de poubelles 16 ne se trouvant pas dans le trajet prévu par la tournée fixe. Dans ce cas, une étape supplémentaire peut consister à décider de dévier du trajet prévu en fonction des informations reçues de la poubelle en question. Les exploitants bénéficient alors d'une flexibilité sur les décisions de collecte, et peuvent améliorer la qualité de la collecte.

Dans certain cas, le dispositif de collecte 12 peut finir la tournée fixe sans que le véhicule soit rempli de déchets. Par finir la tournée fixe, on entend que le dispositif de collecte 12 est passé devant l'ensemble des poubelles 16 prévues sur le trajet. Alors, sous condition de pouvoir connaitre le niveau de remplissage du véhicule 26, et si le véhicule n'est pas plein en fin de tournée planifiée, le conducteur 28 peut recevoir, via l'interface 30, en provenance du serveur 32, un complément de parcours passant à proximité des poubelles 16 supplémentaires. Il apparait possible de s'assurer que chaque collecte exploite les capacités de ramassage du dispositif de collecte 12, améliorant ainsi la qualité de la collecte.

Le complément de parcours peut par exemple passer à proximité de poubelles 16 ayant été identifiées comme pleines. Le complément de parcours peut également rendre compte de remplissages exceptionnels de poubelle(s), par exemple lié à un événement ou une fête ayant généré un pic de déchets. Le complément de parcours peut être reçu du serveur.

L'étape E5 consiste de sauvegarder la décision de collecte, et de réaliser la collecte le cas échéant. La sauvegarde comporte un horodatage de la décision de collecte. L'horodatage permet de mettre à jour l'historique du niveau de remplissage de la poubelle. La sauvegarde comporte une géo position de la poubelle 16. L'association à une géo position permet de s'assurer que la poubelle est à l'endroit prévue, et permet une mise à jour de la position de la poubelle 16 le cas échéant. La sauvegarde est envoyée au serveur 32 pour comparaison et mise à jour de la base de données 34.

Le serveur 32 et le dispositif de collecte 12 peuvent échanger des informations supplémentaires. Par exemple, le dispositif de collecte 12 peut informer le serveur 32 d'un obstacle sur la chaussée empêchant la collecte de la poubelle 16. Le serveur 32 peut également demander au dispositif de collecte d'interroger une poubelle 16 non prévue sur le trajet TV du véhicule 26.

Dans un autre mode de réalisation, le dispositif de collecte 12 ne communique pas avec le serveur 32 durant son trajet TV. Avant la tournée, le dispositif de collecte 12 extrait du serveur 32 les informations prévisionnelles des poubelles 16 sur son trajet TV. Après la tournée, les informations collectées par le dispositif de collecte 12 lors de son trajet TV peuvent être transmises au serveur 32. Ce mode de réalisation permet notamment de limiter les coûts engendrés par l'utilisation d'un réseau cellulaire.

Comme illustré à la figure 6, le dispositif de collecte 12 peut également communiquer avec un ensemble de capteurs 40. L'ensemble de capteur 40 peut comporter un compteur d'eau 42, d'électricité 44, de gaz 46, un capteur de bruit, de pollution ou d'occupation de places de parking. De manière générale, l'ensemble de capteur 40 comprend tous les capteurs sur le trajet TV capable de communiquer avec le dispositif de collecte 12. Lors d'un passage à proximité d'un capteur 42, 44, 46, le dispositif de collecte 12 collecte les données émises par le capteur 42, 44,46. Avantageusement, si des capteurs sont dans une zone blanche non couverte par un réseau de télécommunication, alors les capteurs peuvent être relevés lors du passage du dispositif de collecte 12 à proximité. Les passages réguliers du dispositif de collecte 12 sont mis à profit pour réaliser une collecte des capteurs sans nécessiter le passage de véhicules supplémentaires.

Le dispositif de collecte 12 transmet les données de l'ensemble de capteur 40 vers un serveur 50, 52, 54 concerné par les données collectées. Avantageusement, le dispositif de collecte 12 peut être exploité par des opérateurs différents de ceux concernés par la collecte de déchets.

## Revendications

1. Procédé permettant de prendre une décision sur la collecte d'une poubelle (16) depuis un véhicule (26), le véhicule suivant une tournée de collecte fixe, le procédé comprenant :
- passer à proximité d'une poubelle équipée d'un dispositif de détection de niveau de remplissage (22) pour mesurer un niveau de remplissage de la poubelle ;
- recevoir du dispositif des informations, lesquelles comprennent un niveau de remplissage (20a ,20b, 20c, 20d) de la poubelle (16) ;
**caractérisé en ce que** le procédé comprend :
- prendre connaissance des informations relatives aux prévisions de passage d'un véhicule et/ou aux prévisions de remplissage de la poubelle lors d'un prochain passage de véhicule
- prendre une décision sur la collecte de la poubelle en fonction des informations reçues du dispositif et des informations relatives aux prévisions de passage d'un véhicule et/ou aux prévisions de remplissage de la poubelle lors d'un prochain passage de véhicule.

2. Procédé selon la revendication 1, comprenant en outre recevoir des informations de poubelles additionnelles, les poubelles additionnelles étant situées en dehors d'un trajet prévu par la tournée fixe, et décider de dévier du trajet en fonction des informations reçues des poubelles additionnelles.

3. Procédé selon l'une des revendications 1 ou 2, dans lequel les informations reçues du dispositif (22) comprennent un identifiant de la poubelle (16) et/ou un identifiant du dispositif, et de préférence le procédé comprend l'association des informations reçues du dispositif (22) à une géo position de la poubelle (16).

4. Procédé selon l'une quelconque des revendications précédentes, dans lequel une communication avec le dispositif (12) se fait par réseau Bluetooth, Bluetooth à basse énergie ou un réseau radio local.

5. Procédé selon l'une quelconque des revendications précédentes, dans lequel le dispositif (22) diffuse un signal de manière périodique, de préférence la périodicité du signal diffusé par le dispositif (22) est modulable.

6. Procédé selon l'une quelconque des revendications précédentes, dans lequel le passage à proximité d'une poubelle (16) comprend l'envoi d'une demande de réception des informations de la poubelle.

7. Procédé selon l'une quelconque des revendications précédentes, dans lequel les informations relatives aux prévisions de passage d'un véhicule (26) et/ou de prévisions de remplissage de la poubelle (16) sont reçues d'un serveur distant (32), de préférence une communication avec le serveur (32) se fait par un réseau de télécommunication.

8. Procédé selon la revendication 7, comprenant le stockage des informations reçues du dispositif (22), et/ou comprenant l'envoi des informations reçues du dispositif (22) et/ou la décision de collecte et/ou des informations sur la tournée du véhicule vers le serveur distant (32).

9. Procédé selon l'une des revendications 7 ou 8, dans lequel le serveur (32) réalise une analyse statistique pour déterminer les prévisions de remplissage de la poubelle et/ou optimiser les tournées sur le long terme.

10. Procédé selon l'une quelconque des revendications précédentes, comprenant en outre la réception de données de capteurs (42, 44, 46) quelconques aux alentours du véhicule (26).

11. Système de collecte de poubelles comprenant :
- un ensemble de poubelles (10), chaque poubelle (16) étant équipé d'un dispositif (22) de détection du niveau de remplissage de la poubelle;
- un dispositif de collecte (12) comprenant un véhicule (26), le véhicule étant adapté à suivre des tournées fixes, et une interface permettant de communiquer avec les poubelles à proximité du véhicule, l'interface étant configurée pour assister à la décision de collecte d'une poubelle durant les tournées fixes, dans lequel l'interface (30) comprend un affichage (DISP) pour informer un exploitant du niveau de remplissage (20a) de la poubelle (16), **caractérisé en ce que** l'interface (30) comprend un affichage (DISP) pour informer un exploitant du prochain passage planifié d'un véhicule (26) et/ou d'une prévision de remplissage lors du prochain passage planifié de véhicule (26).

12. Système de collecte de poubelles selon la revendication 11, dans lequel le dispositif de détection (22) comporte au moins un capteur (C) de type capteur ultrason ou capteur Infrarouge.

13. Système de collecte de poubelles selon l'une des revendications 11 ou 12, dans lequel les poubelles sont des conteneurs contenant du verre, des détritus recyclables, des déchets organiques, des déchets non recyclables, des textiles, ou des déchets métalliques.

14. Système de collecte de poubelles selon l'une quelconque des revendications 11 à 13, comprenant un serveur distant (32), le dispositif de collecte (12) étant configuré pour communiquer avec le serveur distant.

15. Système de collecte de poubelles selon l'une quelconque des revendications 11 à 14, dans lequel l'affichage (DISP) comporte au moins l'un parmi : une tournée du véhicule, la géo position des poubelles, l'identifiant d'une poubelle à proximité du véhicule, un niveau de remplissage de la poubelle à proximité du véhicule.

## Patentansprüche

1. Verfahren, das erlaubt, eine Entscheidung über das Einsammeln eines Abfallbehälters (16) von einem Fahrzeug (26) aus zu treffen, wobei das Fahrzeug einer festen Sammeltour folgt, wobei das Verfahren aufweist:
- Vorbeifahren nahe an einem Abfallbehälter, der mit einer Füllstand-Detektionsvorrichtung (22) ausgestattet ist, um einen Füllstand des Abfallbehälters zu messen;
- Empfangen von Informationen von der Vorrichtung, die einen Füllstand (20a, 20b, 20c, 20d) des Abfallbehälters (16) aufweisen;
**dadurch gekennzeichnet, dass** das Verfahren aufweist:
- zur Kenntnis nehmen von Informationen, die die Voraussagen einer Vorbeifahrt eines Fahrzeugs und/oder die Voraussagen einer Füllung des Abfallbehälters bei einer nächsten Vorbeifahrt eines Fahrzeugs betreffen;
- Treffen einer Entscheidung über das Einsammeln des Abfallbehälters auf Basis der von der Vorrichtung empfangenen Informationen und der Informationen, die die Voraussagen einer Vorbeifahrt eines Fahrzeugs und/oder die Voraussagen einer Füllung des Abfallbehälters bei einer nächsten Vorbeifahrt eines Fahrzeugs betreffen.

2. Verfahren nach Anspruch 1, ferner aufweisend Empfangen von Informationen von weiteren Abfallbehältern, wobei die zusätzlichen Abfallbehälter sich außerhalb einer von der festen Tour vorgesehenen Route befinden, und Entscheiden, von der Route abzuweichen, auf Basis der aus den zusätzlichen Abfallbehältern empfangenen Informationen.

3. Verfahren nach einem der Ansprüche 1 oder 2, in welchem die von der Vorrichtung (22) empfangenen Informationen eine Kennung des Abfallbehälters (16) und/oder eine Kennung der Vorrichtung aufweisen, und vorzugsweise das Verfahren eine Verknüpfung der von der Vorrichtung (22) empfangenen Informationen und einer Geoposition des Abfallbehälters (16) aufweist.

4. Verfahren nach einem der vorstehenden Ansprüche, in welchem eine Kommunikation mit der Vorrichtung (12) mittels Bluetooth-Netzwerk, niederenergetischen Bluetooth oder eines lokalen Funknetzes erfolgt.

5. Verfahren nach einem der vorstehenden Ansprüche, in welchem die Vorrichtung (22) periodisch ein Signal ausstrahlt, wobei vorzugsweise die Periodizität des von der Vorrichtung (22) ausgestrahlten Signals modulierbar ist.

6. Verfahren nach einem der vorstehenden Ansprüche, in welchem die Vorbeifahrt nahe an einem Abfallbehälter (16) das Abschicken einer Anfrage zum Empfangen von Informationen von dem Abfallbehälter aufweist.

7. Verfahren nach einem der vorstehenden Ansprüche, in welchem die Informationen, die die Voraussagen einer Vorbeifahrt eines Fahrzeugs und/oder die Voraussagen einer Füllung des Abfallbehälters (16) betreffen, aus einem Fernserver (32) empfangen werden, wobei vorzugsweise eine Kommunikation mit dem Server (32) über ein Telekommunikationsnetzwerk erfolgt.

8. Verfahren nach Anspruch 7, aufweisend das Speichern der von der Vorrichtung (22) empfangenen Informationen und/oder aufweisend das Senden der von der Vorrichtung (22) empfangenen Informationen und/oder der Sammelentscheidung und/oder von Informationen bezüglich der Tour des Fahrzeugs zu dem Fernserver (32).

9. Verfahren nach einem der Ansprüche 7 oder 8, in welchem der Server (32) eine statistische Analyse durchführt, um die Voraussagen einer Füllung des Abfallbehälters zu bestimmen und/oder die Touren langfristig zu optimieren.

10. Verfahren nach einem der vorstehenden Ansprüche, aufweisend ferner das Empfangen von Daten von irgendwelchen Sensoren (42, 44, 46) in der Umgebung des Fahrzeugs (26).

11. System zum Einsammeln von Abfallbehältern, aufweisend:
- eine Gesamtheit von Mühlbehältern (10), wobei jeder Abfallbehälter (16) mit einer Detektionsvorrichtung (22) zum Detektieren des Füllstands des Abfallbehälters ausgestattet ist;
- eine Sammelvorrichtung (12) aufweisend ein Fahrzeug (26), wobei das Fahrzeug angepasst ist, festen Touren zu folgen, und eine Schnittstelle, die eine Kommunikation mit den Abfallbehältern in der Nähe des Fahrzeugs erlaubt, wobei die Schnittstelle konfiguriert ist, bei der Entscheidung zum Einsammeln eines Abfallbehälters während der festen Touren zu assistieren,
in welchem die Schnittstelle (30) eine Anzeige (DISP) aufweist, um einen Betreiber bezüglich des Füllstands (20a) des Abfallbehälters (16) zu informieren,
**dadurch gekennzeichnet, dass** die Schnittstelle (30) eine Anzeige (DISP) aufweist, um einen Betreiber bezüglich der nächsten geplanten Vorbeifahrt eines Fahrzeugs (26) und/oder bezüglich einer Voraussage einer Füllung bei der nächsten geplanten Vorbeifahrt des Fahrzeugs (26) zu informieren.

12. System zum Einsammeln von Abfallbehältern nach Anspruch 11, in welchem die Detektionsvorrichtung (22) mindestens einen Sensor (C) des Typs Ultraschallsensor oder Infrarotsensor aufweist.

13. System zum Einsammeln von Abfallbehältern nach einem der Ansprüche 11 oder 12, in welchem die Abfallbehälter Behälter sind, die Glas, wiederverwertbaren Abfall, organische Abfälle, nichtwiederverwertbare Abfälle, Textilien oder metallische Abfälle enthalten.

14. System zum Einsammeln von Abfallbehältern nach einem der Ansprüche 11 bis 13, aufweisend einen Fernserver (32), wobei die Sammelvorrichtung (12) konfiguriert ist, um mit dem Fernserver zu kommunizieren.

15. System zum Einsammeln von Abfallbehältern nach einem der Ansprüche 11 bis 14, in welchem die Anzeige (DISP) mindestens eine der folgenden aufweist: eine Tour des Fahrzeugs, die Geoposition der Abfallbehälter, die Kennung eines Abfallbehälters in der Nähe des Fahrzeugs, einen Füllstand des Abfallbehälters in der Nähe des Fahrzeugs.

## Claims

1. Method for making a decision about the collection of a waste container (16) by a vehicle (26), the vehicle following a fixed collection route, the method comprising:
- passing near a waste container equipped with a fill level detection device (22) for measuring the fill level of the waste container;
- receiving information from the device, which includes a fill level (20a, 20b, 20c, 20d) of the waste container (16);
**characterized in that** the method comprises:
- taking note of information relating to predictions about the passing of a vehicle and/or fill level predictions for the waste container during an upcoming passing of a vehicle,
- deciding whether to collect the waste container based on the information received from the device and the information relating to the predictions about the passing of a vehicle and/or fill level predictions for the waste container during an upcoming passing of a vehicle.

2. Method according to claim 1, which further comprises receiving information about additional waste containers, the additional waste containers being located off the path planned by the fixed route, and deciding to deviate from the route based on the information received from the additional waste containers.

3. Method according to one of claims 1 or 2, wherein the information received from the device (22) comprises an identifier of the waste container (16) and/or an identifier of the device, and preferably the method comprises associating the information received from the device (22) with a geographic position of the waste container (16).

4. Method according to any one of the preceding claims, wherein communication with the device (12) is via Bluetooth, Bluetooth Low Energy, or a local radio network.

5. Method according to any one of the preceding claims, wherein the device (22) broadcasts a signal periodically, the periodicity of the signal broadcast by the device (22) preferably being modular.

6. Method according to any one of the preceding claims, wherein the passing near a waste container (16) comprises the sending of a request to receive information from the waste container.

7. Method according to any one of the preceding claims, wherein the information relating to the predictions about the passing of a vehicle (26) and/or the fill level predictions for the waste container (16) are received from a remote server (32), communication with the server (32) preferably being made via a telecommunications network.

8. Method according to claim 7, comprising the storing of information received from the device (22), and/or comprising the sending to the remote server (32) of information received from the device (22) and/or the collection decision and/or the vehicle route information.

9. Method according to one of claims 7 or 8, wherein the server (32) carries out a statistical analysis in order to determine the fill level predictions for the waste container and/or to optimize the routes over the long term.

10. Method according to any one of the preceding claims, further comprising the receiving of data from any sensors (42, 44, 46) that are in the vicinity of the vehicle (26).

11. Waste container collection system comprising:
- a set of waste containers (10), each waste container (16) being equipped with a fill level detection device (22) for the waste container;
- a collection device (12) comprising a vehicle (26), the vehicle being adapted to follow fixed routes, and an interface for communicating with the waste containers near the vehicle, the interface being configured to assist in the decision on whether to collect a waste container during the fixed routes, the interface (30) comprising a display (DISP) for informing an operator of the fill level (20a) of the waste container (16), **characterized in that** the interface (30) comprises a display (DISP) for informing an operator of the next scheduled passing of a vehicle (26) and/or a prediction of the fill level during the next scheduled passing of a vehicle (26).

12. Waste container collection system according to claim 11, wherein the detection device (22) comprises at least one sensor (C) that is of the ultrasonic sensor or infrared sensor type.

13. Waste container collection system according to one of claims 11 or 12, wherein the waste containers are containers containing glass, recyclable refuse, organic waste, non-recyclable waste, textiles, or metal waste.

14. Waste container collection system according to any one of claims 11 to 13, comprising a remote server (32), the collection device (12) being configured to communicate with the remote server.

15. Waste container collection system according to any one of claims 11 to 14, wherein the display (DISP) comprises at least one of: a vehicle route, the geographical position of the waste containers, the identifier of a waste container near the vehicle, a fill level of the waste container near the vehicle.
